# EUROPEAN PATENT APPLICATION

(11) **EP 3 243 879 A1**
(43) Date of publication of application: **15.11.2017**
(21) Application number: 16169687.7
(22) Date of filing: 13.05.2016
(51) Int. Cl.: C09D 5/18, C08G 18/67, C08F 290/06, C08F 290/14, C08G 18/08, C09D 175/04, C09J 175/04

(54) **AQUEOUS FLAME-RETARDANT POLYURETHANE/ACRYLATE HYBRID POLYMERIC DISPERSIONS**

(71) Applicant: Henkel AG & Co. KGaA, 40589 Düsseldorf (DE)
(72) Inventor: ZHAO, Ligang, 40593 Düsseldorf (DE); SAUCA, Sorin N., 300152 Timisoara (RO); GIMENO GORMAZ, Nélida, 50010 Zaragoza (ES); PÉREZ BRIONES, Aurora, 03780 Pego (ES)

(57) **Abstract**

The present invention relates to methods for the preparation of aqueous polyurethane/acrylic hybrid dispersions comprising hydrophobic flame retardants that can be used as adhesives or coatings, are surfactant free and have low VOC emissions and are environmentally friendly, are cost-efficient due to having high acrylic contents, and provide for homogeneous and aging-resistant adhesives after drying. As hybrid materials, they provide for a versatile system that can be finely tuned and combines the advantageous properties of polyurethane and polyacrylate materials. Also encompassed are the thus obtained aqueous dispersions, compositions containing them and their use as coatings and adhesives.

## Description

The present invention relates to methods for the preparation of aqueous polyurethane/acrylic hybrid dispersions comprising hydrophobic flame retardants that can be used as adhesives or coatings, are surfactant free and have low VOC emissions and are environmentally friendly, are cost-efficient due to having high acrylic contents, and provide for homogeneous and aging-resistant adhesives after drying. As hybrid materials, they provide for a versatile system that can be finely tuned and combines the advantageous properties of polyurethane and polyacrylate materials. Also encompassed are the thus obtained aqueous dispersions, compositions containing them and their use as coatings and adhesives.

Polyurethane/acrylic hybrid waterborne dispersions are innovative materials that combine in a unique system the typical properties of the two different polymeric components, resulting in most cases in materials with improved properties. Whereas polyurethanes (PU) provide chemical resistance, good film formation properties, toughness, flexibility or superior low-temperature impact resistance, polyacrylates (PA) improve the water and weathering resistance, the anti-aging properties (yellowing reduction) and the gloss. Hence, this combination of properties makes these hybrid latexes suitable candidates to be used as adhesive for lamination of thermoplastic materials to rigid substrates typically used in the automotive industry. In order to provide flame retardant properties to said adhesives and coatings, flame retardants are used. Water miscible flame retardants are commonly based on toxic heavy metals and therefore disadvantageous. While the majority of flame retardants are hydrophobic, they typically suffer from the drawback that their hydrophobicity causes problems during the production of aqueous adhesives and coating compositions. Specifically, to provide a flame retardant aqueous adhesive or coating composition free of heavy metals, said adhesives and coatings are commonly formulated in a first step and the flame retardant is blended in a second step. However, this established approach often causes stability problems, as the obtained product is not storage stable and undergoes phase separation. In addition, the production method includes an additional blending step.

For example, US 6,169,043 B discloses airbag coating compositions comprising polyurethane, polyacrylates, and a flame retardant, wherein the waterborne polyurethane/acrylic hybrid polymer dispersion is obtained in a first step, which is subsequently blended with a flame retardant in a following step. However, the obtained dispersion lacks storage stability.

In addition, commonly used halogenated organic flame retardants are usually used in combination with antimony trioxide, which acts as a synergist and boosts their flame retardant properties.

However, the use of antimony trioxide is undesirable for environmental and health reasons and requires complex suspension protocols.

There exists thus need in the art for improved polyurethane/acrylic hybrid systems with flame retardant properties that overcome at least some of the drawbacks of known systems.

The present invention described herein solves the known issues, allowing the production of stable waterborne polyurethane/acrylic hybrid dispersions comprising flame retardants without surfactants in an environmentally friendly process. The invention generally relates to a method to produce a dispersion of polyurethane/acrylic hybrid particles comprising flame retardants in water, without using any surfactants, by applying shear forces. To obtain stable dispersions anionic stabilizers are incorporated into the polyurethane chain, not affecting the water resistance of the final product. The blending of the different systems is achieved by formation of hybrid particles having a core shell morphology that comprise a mostly acrylate core and a polyurethane shell, which are cross-linked by cross-linking monomers, in particular vinyl-functionalized polyols, that are incorporated into the polyurethane backbone structure during prepolymer formation.

In a first aspect, the present invention thus relates to a process for manufacturing an aqueous polyurethane acrylate hybrid polymer dispersion comprising at least one hydrophobic flame retardant, the process including:
(1) forming an NCO-terminated, vinyl-functionalized polyurethane prepolymer with a number average molecular weight Mₙ in the range of 2000 g/mol to 10000 g/mol, preferably of 3000 g/mol to 8000 g/mol, more preferably of 4000 g/mol to 5000 g/mol from a reaction mixture comprising or consisting of:
   (a) at least one polyol with a number average molecular weight Mₙ in the range of 400 to 4000 g/mol, preferably 400 g/mol to 3000 g/mol, wherein said polyol is a non-functionalized polyol containing no functional groups besides the hydroxyl groups;
   (b) at least one vinyl-functionalized polyol, preferably an allyl-functionalized polyol, wherein the at least one vinyl-functionalized polyol comprises at least two hydroxyl groups and at least one vinyl group;
   (c) at least one anionic stabilizer, wherein the at least one anionic stabilizer comprises at least two hydroxyl groups and at least one negatively charged functional group, preferably a carboxyl or sulfonic acid group;
   (d) at least one polyisocyanate, preferably at least one aliphatic di- and/or triisocyanate, wherein the at least one polyisocyanate is used in molar excess with respect to the molar ratio of the isocyanate groups to the hydroxy groups of the other components of the reaction mixture to obtain an NCO-terminated, vinyl-functionalized polyurethane prepolymer;
(2) dissolving the prepolymer obtained in step (1) in
   (a) at least one acrylic monomer and subsequently adding the at least one hydrophobic flame retardant to the prepolymer/acrylic monomer mixture, or
   (b) a mixture comprising at least one hydrophobic flame retardant and at least one acrylic monomer,
   to obtain a prepolymer/acrylic monomer/hydrophobic flame retardant mixture;
(3) dispersing the prepolymer/acrylic monomer/hydrophobic flame retardant mixture into a continuous aqueous phase, preferably under application of shear forces, more preferably by mechanical stirring, to obtain an emulsion;
(4) reacting the prepolymer with at least one chain extension agent; and
(5) polymerizing the vinyl groups of the prepolymer and the at least one acrylic monomer to obtain the polyurethane acrylate hybrid polymer dispersion.

In another aspect, the invention relates to the aqueous polyurethane acrylate hybrid polymer dispersion obtainable according to the process described herein.

Further aspects of the invention relate to adhesive or coating compositions that contain the aqueous hybrid polymer dispersion disclosed herein and the use of the aqueous hybrid polymer dispersion in adhesives and coatings.

"One or more", as used herein, relates to at least one and comprises 1, 2, 3, 4, 5, 6, 7, 8, 9 or more of the referenced species. Similarly, "at least one" means one or more, i.e. 1, 2, 3, 4, 5, 6, 7, 8, 9 or more. "At least one", as used herein in relation to any component, refers to the number of chemically different molecules, i.e. to the number of different types of the referenced species, but not to the total number of molecules. For example, "at least one polyol" means that at least one type of molecule falling within the definition for a polyol is used but that also two or more different molecule types falling within this definition can be present, but does not mean that only one molecule of said polyol is present.

If reference is made herein to a molecular weight, this reference refers to the average number molecular weight Mₙ, if not explicitly stated otherwise. The number average molecular weight Mₙ can be calculated based on end group analysis (OH numbers according to DIN 53240) or can be determined by gel permeation chromatography according to DIN 55672-1:2007-08 with THF as the eluent. If not stated otherwise, all given molecular weights are those determined by end group analysis. The weight average molecular weight M_{w} can be determined by GPC, as described for Mₙ.

All percentages given herein in relation to the compositions or formulations relate to weight % based on the total weight of the respective composition or formula, if not explicitly stated otherwise.

The at least one polyol (a) is a non-functionalized polyol, e.g. contains no functional groups, such as vinyl or halogen groups, besides the hydroxyl groups. Ether or ester groups formed by polymerization of monomeric polyols are no functional groups in the sense of the present invention. Accordingly, a polymeric polyol (a) may contain oxygen atoms or -C(O)-O groups within the chain.

The polyol (a) has a number average molecular weight Mₙ in the range of 400 to 4000 g/mol, preferably of 400 to 3000 g/mol, more preferably 1000 to 2500 g/mol. The polyol (a) may be selected from at least one polyester polyol, at least one polycarbonate polyol, at least one polyether polyol, at least one polybutadiene polyol, or a mixture of any two or more of the afore-mentioned polyols. Also contemplated are thus mixtures of two or more polyester polyols and/or two or more polyether polyols and/or two or more polybutadiene polyols. In preferred embodiments, polyol (a) is selected from polyester polyols, polycarbonate polyols, polyether polyols, or mixtures of any two or more of the afore-mentioned polyols. Particularly preferred are polyester and polycarbonate polyols or mixtures thereof.

Polyester polyols that are useful in the processes described herein include those that are obtainable by reacting, in a polycondensation reaction, dicarboxylic acids with polyols. The dicarboxylic acids may be aliphatic, cycloaliphatic or aromatic and/or their derivatives such as anhydrides, esters or acid chlorides. Specific examples of these are succinic acid, glutaric acid, adipic acid, pimelic acid, suberic acid, azelaic acid or sebacic acid, phthalic acid, isophthalic acid, trimellitic acid, phthalic acid anhydride, tetrahydrophthalic acid anhydride, glutaric acid anhydride, maleic acid, maleic acid anhydride, fumaric acid, dimeric fatty acid and dimethyl terephthalate. Examples of suitable polyols are monoethylene glycol, 1,2-propanediol, 1,3-propanediol, 1,4-butanediol, 3-methylpentane-1,5-diol, neopentyl glycol (2,2-dimethyl-1,3-propanediol), 1,6-hexanediol, 1,8-otaneglycol cyclohexanedimethanol, 2-methylpropane-1,3-diol, dithyleneglycol, triethyleneglycol, tetraethyleneglycol, polyethyleneglycol, dipropyleneglycol, polypropyleneglycol, polypropyleneglycol, dibutyleneglycol and polybutyleneglycol. Alternatively, they may be obtained by ring-opening polymerization of cyclic esters, preferably ε-caprolactone.

In various embodiments, the polyester polyol has a melting temperature Tₘ > 0°C, preferably > 40 °C and/or has a number average molecular weight Mₙ in the range of 400 to 4000, preferably 400 to 3000 g/mol, more preferably 1000 to 2500 g/mol.

The polyether polyol may be a polyalkylene glycol homo- or copolymer, preferably a polypropylene glycol homo- or copolymer, a polyethylene glycol homo- or copolymer, a polytetramethylene glycol homo- or copolymer, or a polypropylenglycol/polyethyleneglycol block copolymer. In various embodiments, the polyether polyol has a weight average molecular weight M_{w} of 400 to 4000, preferably 400 to 3000 g/mol.

The polybutadiene polyol is preferably a non-branched hydroxyl-terminated hydrogenated polybutadiene, i.e. a polybutadiene diol, with low molecular weight, preferably having a number average molecular weight, Mₙ, of about 1000 to 4000, more preferably about 1000 to 3000, and a 1,2-vinyl content of about 5 mol percent or less, with an average hydroxyl functionality less than or equal to 2 per molecule. These non-branched polybutadienes are preferably derived from anionic polymerization and the hydroxyl groups can be primary or secondary.

Suitable polycarbonates can be obtained by reaction of carbon acid derivatives, e.g. diphenyl carbonate, dimethyl carbonate or phosgene with diols. Suitable examples of such diols include ethylene glycol, 1,2-and 1,3-propanediol, 1,3-and 1,4-butanediol, 1,6-hexanediol, 1,8-octanediol, neopentyl glycol, 1,4-bishydroxymethyl cyclohexane, 2-methyl-1,3-pro-panediol, 2,2,4-trimethyl pentanediol-1,3, dipropylene glycol, polypropylene glycols, dibutylene glycol, polybutylene glycols, bisphenol A, tetrabromobisphenol A as well as lactone-modified diols. The diol component preferably contains 40 to 100 wt. % hexanediol, preferably 1,6-hexanediol and/or hexanediol derivatives. More preferably the diol component includes examples that in addition to terminal OH groups display ether or ester groups.

The hydroxyl polycarbonates should be substantially linear. However, they can optionally be slightly branched by the incorporation of polyfunctional components, in particular low-molecular polyols. Suitable examples include glycerol, trimethylol propane, hexanetriol-1,2,6, butanetriol-1,2,4, trimethylol propane, pentaerythritol, quinitol, mannitol, and sorbitol, methyl glycoside, 1,3,4,6-dianhydrohexites.

In various embodiments, the polycarbonate polyol has a melting temperature Tₘ > 0°C, preferably > 40 °C. In various preferred embodiments, the polycarbonate polyol has a number average molecular weight Mₙ in the range of 400 to 4000, preferably of 500 to 3000 g/mol, more preferably of 1000 to 3000 g/mol, most preferably of about 2000 g/mol.

Suitable polycarbonate polyols are, without limitation, those obtainable under the trademark names Desmophen® C3200 (Bayer) and Kuraray® C2050 (Poly-(3-methyl-1,5-pentanediol, 1,6-hexanediol)carbonate; Kuraray).

The reaction mixture may further comprise monomeric diols, such as 1,4-butanediol.

The vinyl-functionalized polyol may be a vinyl group-containing diol. "Vinyl-functionalized polyol", as used herein, relates to compounds that comprise at least two hydroxyl groups and at least one vinyl group. Preferred are allyl-functionalized polyols, in particular polyol allyl ethers, wherein the polyol allyl ether is optionally selected from monoethers of allyl alcohol with a polyol with three or more hydroxyl groups, such as glycerol. In various embodiments, the vinyl-functionalized polyol is thus a monomeric polyol. Without being limited thereto, the vinyl-functionalized polyol typically has a number average molecular weight Mₙ less than 400 g/mol. A preferred vinyl-functionalized polyol useful according to the present invention is 3-allyloxy-1,2-propanediol (glycerol allyl ether; GAE). The terms "vinyl" and "allyl", as used herein, relate to the groups H₂C=CR and H₂C=CR-CR'R", respectively, wherein R, R' and R" are any residues.

The vinyl-functionalized polyol is built into the polyurethane prepolymer and provides for vinyl groups that can in subsequent steps be reacted with the acrylic monomers, thus providing for cross-linking of the polyacrylate and the polyurethane.

In various embodiments, the reaction mixture may further comprise at least one modified polyether polyol, in particular a halogenated polyether polyol, such as chlorinated, brominated and/or fluorinated polyether polyols. The modified polyether polyol may also be maleated or maleated and halogenated. "Maleated", as used in this context, means that the polyether is grafted with maleic anhydride. These modified polyether polyols provide for an increased adhesion to surfaces with low surface energy due to their nonpolar properties.

The reaction mixture further comprises at least one anionic stabilizer. The term "stabilizer", as used herein in the context of anionic and nonionic stabilizers, relates to a class of molecules that can stabilize the droplets in a dispersion or emulsion, i.e. prevent coagulation or coalescence. In various embodiments the stabilizer molecules comprise a hydrophilic and a hydrophobic part, with the hydrophobic part interacting with the droplet and the hydrophilic part be exposed to the solvent. While commonly used stabilizers are surfactants and may bear an electric charge, for example may be anionic surfactants or cationic surfactants, or may, alternatively, be non-ionic, the present invention avoids the use of surfactants, but uses stabilizer compounds that are built into the polyurethane polymer during (pre)polymer formation that provide for self-emulsifiable polyurethanes which spontaneously form stable dispersions in water without the assistance of external emulsifiers and exhibit increased stability.

The anionic stabilizers used herein comprise anionic groups. The presence of such charged groups increases the stability of the dispersed polymer droplets or particles. Suitable anionic groups include, but are not limited to acidic groups, such as carboxylic acid or sulfonic acid groups and their respective salts. Concrete compounds suitable as anionic stabilizers in the sense of the present invention are 2,2-bis(hydroxyalkyl)alkane monocarboxylic acids, in particular 2,2-bis(hydroxymethyl)alkane monocarboxylic acids with a total carbon atom number of 5-8, such as 2,2-bis(hydroxymethyl)propionic acid (dimethylol propionic acid; DMPA). Also suitable are sulfonated polydiols with a molecular weight M_{w} in the range of up to 1000 g/mol, preferably up to 500 g/mol. Such sulfonated polydiols, for example propoxylated 1-methyl-2-methylol-3-hydroxy-1-propanesulfonate with a molecular weight M_{w} of about 430 g/mol, are commercially available under the name GS-7Q (Yedang G & Co. Ltd).

In various embodiments, the above-described anionic stabilizers are combined with other compounds that can act as stabilizers, in particular nonionic stabilizers. In various embodiments, such nonionic stabilizers comprise polyols, preferably diols, or a mixture of different polyols and/or diols, including the monomeric diols and certain polyether polyols that have been described above in connection with the polyol (a). Such nonionic stabilizers have HLB (hydrophile lipophile balance) values between 6 and 19. The HLB values are calculated by calculating the molecular weight of the hydrophilic portion of the molecule and dividing said molecular weight of the hydrophilic part of the molecule by the total molecular weight of the molecule and then dividing the obtained percentage by 5. Typical nonionic stabilizers for oil-in-water emulsions have HLB values of 8-18. Preferred monomeric diols are glycols, such as ethylene glycol, propylene glycol, butylene glycol, neopentyl glycol and the like and (as polyether polyols) polymers thereof, such as polyethylene glycol, polypropylene glycol, and polybutylene glycol and copolymers of ethylene glycol, propylene glycol, and butylene glycol, preferably of ethylene glycol and propylene glycol. The average molecular weight M_{w} of such polymeric stabilizers is preferably in the range of up to about 4000 g/mol, preferably up to about 3000 g/mol, more preferably up to about 2000 g/mol. Suitable non-ionic ethylene glycol/propylene glycol stabilizers are for example those commercially available under the trademark name Pluronic® from BASF, for example Pluronic PE3500 (molar mass of PP glycol block: 850 g/mol, 10 % PE glycol in molecule; molecular weight ca. 1000 g/mol) or Pluronic PE4300 (molar mass of PP glycol block: 1100 g/mol, 30 % PE glycol in molecule; molecular weight ca. 1750 g/mol).

In various embodiments of the invention, the at least one anionic stabilizer, such as DMPA and/or a sulfonated polydiol, may be combined with a nonionic polyol stabilizer, preferably diol stabilizer, as defined above. In one specific embodiment, the mixture comprises at least one ethyleneglycol/propyleneglycol copolymer with a molecular weight M_{w} of up to 3000 g/mol and at least one anionic diol stabilizer, preferably DMPA or a sulfonated polydiol or both. In such mixtures the weight ratio of nonionic to anionic stabilizer usually ranges from about 1:1 to about 20:1, preferably about 9:1 to 1:1. The polyol mixture, in various embodiments, comprises 0.1 to 20 wt.-%, preferably 4 to 9 wt.-%, more preferably about 8 wt.-%, of the anionic stabilizer and/or 1 to 20 wt.-%, preferably 5 to 8 wt.-%, more preferably about 7 wt.-%, of the nonionic stabilizer.

The term "reaction mixture", as used herein, relates to the mixture of the polyols, including the vinyl-functionalized polyol, the stabilizer(s) and the polyisocyanate(s). Preferably, the reaction mixture is free of surfactants and/or aromatic organic compounds besides those mentioned herein.

The term "Polyol mixture", as used herein in relation to the mixture comprising the polyols, relates to a mixture comprising the at least one polyol (a), the at least one vinyl-functionalized polyol (b), the at least one anionic stabilizer (c), if present, the modified polyether polyol, the nonionic stabilizer, and, optionally, any additional polyols that may be present.

It is preferred that the polyol mixture does not contain any organic solvents or surfactants and no further additives, i.e. consists of polyols, preferably those defined above, and the stabilizers.

In various embodiments, the polyol mixture comprises about 20 to about 99 wt.-%, preferably 30 to 85 wt.-%, of the at least one polyol (a), preferably a mixture of different polyols, for example of polycarbonate polyols, polyester polyols and/or polyether polyols, based on the weight of the polyol mixture. In some embodiments, the at least one polyol (a) may comprise a nonionic stabilizer polyol as defined above.

The vinyl-functionalized polyol may be comprised in amounts of up to 5 wt.-% based on the weight of the polyol mixture, but usually is used in an amount of about 1 to about 3 wt.-%, preferably 1.5 to 2.5 wt.-%.

The anionic stabilizer is usually contained in amounts of about 1 to 20 wt.-%, preferably 4 to 9 wt.-%, more preferably about 8 wt.-% based on the weight of the polyol mixture. If a mixture of stabilizing compounds is employed, anionic stabilizers as defined above, may be used in amounts of 1 to 15 wt.-% and non-ionic stabilizers in amounts of 1 to 30 wt.-% based on the polyol mixture.

The modified polyether polyol, if present, is in various embodiments used in amounts of up to 15 wt.-%, based on the weight of the polyol mixture, preferably 4 to 10 wt.-%.

The final reactant employed in the formation of the polyurethane prepolymer is a polyisocyanate. Any compound which includes at least two isocyanate groups is within the contemplation of the present invention. It is preferable, however, that the polyisocyanate be a diisocyanate. The incorporation of small amounts of isocyanate with a functionality higher than two, in particular a triisocyanate, is also contemplated and may under certain circumstances even be advantageous. Such polyisocyanates can act as cross-linkers. In this case where the polyisocyanate acts as a cross-linker, polyisocyanates based on hexamethylene diisocyanate are preferred. Suitable diisocyanates include, without limitation, methylenediphenyl diisocyanate (MDI), toluene-2,4-diisocyanate (TDI), hexamethylene diisocyanate (HDI), polymeric diphenylmethane diisocyanate (PMDI), isophorone diisocyanate (IPDI), methylene-4,4-bis(cyclohexyl)diisocyanate (H12MDI) and mixtures thereof. Although both aliphatic and aromatic polyisocyanates are within the contemplation of the present invention, it is preferred that the polyisocyanate be an aliphatic polyisocyanate. Thus, in a particularly preferred embodiment, the polyisocyanate is an aliphatic diisocyanate. Among particularly preferred aliphatic diisocyanates are isophorone diisocyanate, hexamethylene diisocyanate, and mixtures thereof. Suitable polyisocyanates are, for example, commercially available under the trademark name Desmodur® from Bayer AG (DE).

The polyisocyanate is used in molar excess with respect to the molar ratio of the isocyanate groups to the OH groups of all polyols present in the reaction mixture, i.e. in a concentration in excess of the stoichiometric concentration required to completely react with the hydroxyl groups, the OH/NCO equivalent ratio preferably being 1:1.1 to 1:4, more preferably 1:1.2 to 1:1.3. Preferably, the amount of the polyisocyanate is 20 % to 150 % in excess of the stoichiometric concentration required to completely react with the hydroxyl groups. The amount of the at least one polyisocyanate in the reaction mixture is typically in the range of 10 to 30 wt.-% based on the reaction mixture. The remainder of the reaction mixture may be made up by the polyol mixture, as defined above.

Providing the polyol mixture may include the step of mixing the polyols (a) and (b) and the stabilizers and heating the mixture. The heating may be required in case the polyols employed are solid at room temperature and need to be melted to form the polyol mixture. In preferred embodiments, the polyols and the at least one stabilizer are combined and heated to about 70 to 95°C, for example about 75°C, while stirring the mixture under vacuum to dry. After the mixing, the mixture may be cooled to 60°C for the addition of the isocyanates.

"About", as used herein, relates to ± 10 %, preferably ± 5 % of the numerical value to which it refers. "About 70 °C" thus relates to 70 ± 7, preferably 70 ± 3.5 °C.

The polyol mixture is subsequently combined with at least one polyisocyanate in the reaction mixture to form the prepolymer. The prepolymer reaction usually occurs at elevated temperature, preferably in the range of between about 60 °C and about 95 °C, more preferably about 60-80 °C, over a period of between about 1 and about 24 hours. The reaction may be carried out in the presence of a catalyst that is added, preferably a tin-based catalyst, more preferably dimethyldineodecanoatetin, such as Fomrez UL28. In preferred embodiments of the invention, the reaction mixture thus further comprises a catalyst as defined above.

The reaction continues until the free isocyanate content reaches or comes very close to the calculated value, as determined by standard titration with dibutylamine. Preferred values for the free isocyanate content in the prepolymer are in the range between 0.2 and 3 wt.-%, preferably 1 to 2 wt.-% based on the total amount of polyols, including the stabilizer(s), and polyisocyanate in the mixture.

Once the free isocyanate content reaches the predetermined value, as defined above, the temperature may be reduced, for example to about 60 °C.

In various embodiments, the prepolymer has an average number molecular weight Mₙ of 2000 to 10000, preferably 3000 to 8000, more preferably 4000 to 5000 g/mol.

In a first alternative of step (2), the obtained prepolymer is then dissolved in at least one acrylic monomer, preferably a mixture of two or more different acrylic monomers, and the at least one hydrophobic flame retardant is subsequently added to obtain a prepolymer/acrylic monomer/hydrophobic flame retardant mixture. The acrylic monomers are preferably selected from acrylate monomers, methacrylate monomers and mixtures thereof, preferably hydrophobic acrylate monomers, methacrylate monomers and mixtures thereof, more preferably esters of (meth)acrylic acid with mono alcohols having 1 to 20, preferably 2 to 8 carbon atoms. Particularly preferred are ethyl(meth)acrylate, butyl(meth)acrylate, 2-ethylhexyl(meth)acrylate and octyl(meth)acrylate. "Acrylic", as used herein, relates to acrylates and methacrylates. Similarly, the term "(meth)acrylate", refers to the methacrylate or the acrylate.

The amounts of the prepolymer and the acrylic monomers are preferably selected such that the weight proportion of polyurethane to acrylic in the final hybrid polymer is from 30:70 to 70:30, preferably 40:60 to 50:50. The methods described herein allow the use of comparably high amounts of acrylics without the risk of phase separation in the resulting films. With wishing to be limited to a particular theory, it is believed that this is attributable to the crosslinking with vinyl groups that are pendant to the PU prepolymer chain instead of using vinyl-endcapped polymer chains only as well as the core-shell morphology of the particles that arises from the specific steps, more particularly the order of the steps of the described methods.

It is also possible to use mixtures of different acrylic monomers. In preferred embodiments, one or more alkyl(meth)acrylates are used, preferably n-butylacrylate, n-butylmethacrylate, ethylmethacrylate or mixtures of any two or more thereof.

To dissolve the prepolymer in the acrylic monomers, the mixture may be heated, for example to a temperature of 40 to 70 °C, preferably 50 and 60 °C, preferably under stirring. Alternatively or additionally, a co-solvent may be used. Preferred are organic co-solvents, in particular those being fully miscible with water, such as acetone. In various embodiments, such co-solvents, in particular acetone, are used in amounts of up to 50 wt.-%, preferably up to 40 wt.-%, more preferably up to 25 wt.-% based on the prepolymer/acrylic monomer/co-solvent mixture. The co-solvent is preferably removed after step (5), for example by vacuum distillation.

In general, the at least one hydrophobic flame retardant may be any hydrophobic flame retardant known in the art, which is suitable for the purpose of the present invention. In a preferred embodiment, the at least one hydrophobic flame retardant is selected from the group consisting of organohalogen flame retardants, organophosphorous flame retardants, and mixtures thereof. More preferably, the flame retardant is selected from the group consisting of 1,2-di-[2-ethylhexylcarboxylate]-3,4,5,6-tetrabromobenzene, which is commercially available under the trademark DP-45® from Great Lakes, diphenyl tolyl phosphate, which is commercially available under the trademark Disflamoll DPK® from Lanxess, organobromines such as decabromodiphenyl ether (decaBDE), decabromodiphenyl ethane, which is a replacement for decaBDE, polymeric brominated compounds such as brominated polystyrenes, brominated carbonate oligomers (BCOs), brominated epoxy oligomers (BEOs), tetrabromophthalic anyhydride, tetrabromobisphenol A (TBBPA) and hexabromocyclododecane (HBCD), triphenyl phosphate (TPP), resorcinol bis(diphenylphosphate) (RDP), bisphenol A diphenyl phosphate (BADP), and tricresyl phosphate (TCP) and polyphosphates such as those available from Daihatsu Chemical under the tradenames CR733S, CR741 and PX-200; aliphatic phosphonates such as dimethyl methylphosphonate (DMMP) and such as those available from Daihatsu Chemical under the tradenames DAIGUARD-580, -610 and -880; and phosphinates such as aluminum diethyl phosphinate, tris(2,3-dibromopropyl) phosphate (brominated tris) and chlorinated organophosphates such as tris(1,3-dichloro-2-propyl)phosphate (chlorinated tris or TDCPP) and tetrakis(2-chlorethyl)dichloroisopentyldiphosphate, and mixtures thereof. Alternatively, the phosphorous-containing flame retardant commercially available under the trademark Emerald Innovation NH-1® from Great Lakes may be used. In various embodiments, the flame retardants do not include heavy metals, in particular antimony. In various other embodiments, the flame retardants used are preferably halogen-free.

In a preferred embodiment, the at least one hydrophobic flame retardant is an organophosphorous flame retardant.

In various embodiments, the flame retardant is contained in the aqueous dispersion in an amount of 2 to 30 wt.-%, preferably 5 wt.-% to 25 wt.-%, and more preferably 15 wt.-% based on the total weight of the aqueous dispersion with a solid content up to 55%.

In a second alternative of step (2), the obtained prepolymer is directly dissolved in a mixture comprising at least one hydrophobic flame retardant and at least one acrylic monomer, if suitable. The weight ranges, weight proportions etc. of the first alternative described above are similarly applicable to the second alternative.

In various embodiments, the prepolymer may be neutralized at this stage by using a suitable neutralization agent. In case an anionic acidic stabilizer is used, an amine base, such as triethylamine may be used.

The thus formed prepolymer/acrylic monomer/hydrophobic flame retardant mixture is then dispersed in a continuous aqueous phase, preferably water. The dispersing step may be carried out at elevated temperature, for example in the range of about 30 to 60 °C, for example at about 40 °C. The dispersing step may include emulsifying the polyurethane prepolymer/acrylic monomer mixture into a continuous aqueous phase, preferably water, to form an emulsion, preferably under the action of a shear force. In various embodiments, the shear force is brought about by means of mechanical stirring only, for example using a mechanical stirrer. Alternatively, high shear devices, such as a homogenizer, operating at pressures of 2000 to 15000 psi, preferably 8000 to 12000 psi, may be used. Suitable devices are microfluidizers, such as those available from Microfluidics. In such methods, first a pre-emulsion may be prepared by vigorous stirring, for example in an Ultra-Turrax at about 15000 rpm, with this preemulsion then being passed through a homogenizer.

The term "emulsion", as used herein, relates to oil-in-water (O/W) emulsions, i.e. emulsions in which water is used in excess and is the continuous medium. In the described processes, stable droplets are obtained, which have typically a size between 50 and 500 nm, preferably between 100 and 400 nm, as determined by dynamic light scattering (DLS) according to ISO 22412.

During chain extension in step (4), the isocyanate end-groups of the prepolymer are reacted with an appropriate chain extender containing at least two terminal NCO-reactive groups, for example a diamine, such as hydrazine, an alkylene diamine or cycloalkylene diamine, preferably ethylene diamine, isophorone diamine, piperazine, or polyetheramine. Diols, such as an alkyldiol, including but not limited to 1,4-butanediol and 2-butyl-2-ethyl-1,3-propanediol, or water can also be used. The chain extension reaction may be performed until essentially total conversion of the isocyanate groups, i.e. the chain extension agent is continuously added until free isocyanate groups are no longer detectable. It is generally preferred that the chain extension reaction is carried out until total conversion of the isocyanate groups. The conversion can be monitored by techniques well-established in the art, for example IR spectroscopy.

The presence of a catalyst and/or higher temperature may also be required. Preferred chain extension agents useful according to the present invention include ethylene diamine, water, isophorone diamine, and/or a polyetherdiamine.

After chain extension, the polymerization of the acrylic monomers and the vinyl groups present in the prepolymer is carried out by the appropriate polymerization process, preferably by radical polymerization. For this purpose, polymerization initiators can be used. Readily usable initiators may be thermally activatable or redox activatable and are preferably selected from radical initiators. Suitable radical initiators are widely known in the art and readily available and include organic azo or peroxo compounds. The initiators are preferably water-soluble. When the polymerization is initiated by water-soluble initiator, free radicals generate in aqueous phase first and diffuse to water/monomer interface to initiate the polymerization inside droplets. Exemplary initiators used herein include potassium peroxodisulfate (KPS) or initiator systems based on formamidinesulfinic acid with tert-butyl hydroperoxide (TBHP). The polymerization can be carried out at elevated temperature, for example a temperature in the range of 20 to 85°C, preferably 55 to 58°C. The polymerization time can range from 0.1 to 24 hours, preferably 0.5 to 6 hours, more preferably 1 to 3 hours.

The aqueous polyurethane/acrylic/flame retardant hybrid dispersion formed, preferably has a solid content of 30 to 60 wt.-%, preferably 40 to 50 wt.-%. The viscosity is preferably in the range of 50 to 10000 mPas, preferably 100 to 1000 mPas as determined by a Brookfield viscosimeter, spindle 4, 20 rpm. The viscosity may be adjusted to suit the desired application form by adding a thickener. Suitable viscosity adjusting and thickening agents are well-known in the art. The particle size as determined by dynamic light scattering (DLS) is preferably in the range of 50 to 500 nm, more preferably 100 to 400 nm, most preferably 200 to 400 nm. The application drying temperature can range from 20 to 100°C, but preferably is about 60 to 80°C.

The aqueous polyurethane/acrylic hybrid dispersions described herein may then be used as an adhesive or coating.

The present invention also relates to adhesive compositions that comprise the aqueous polyurethane/acrylic/flame retardant hybrid dispersions optionally in combination, i.e. blended with, with other components, such as (aqueous) rosin-based resin dispersions, (aqueous) polyacrylic resin dispersions and/or at least one (modified) polyolefin.

Such adhesive or coating compositions can generally contain further ingredients all of which are well-known in the field. It is however preferred that neither the dispersions nor the final compositions containing the dispersions contain organic solvents. Accordingly, as described above, in case a co-solvent has been used for the dispersion of the PU prepolymer/acrylic monomer mixture, said co-solvent is removed after polymerization of the acrylic monomers, such that, in various embodiments, the dispersions and/or compositions are essentially free of organic solvents. "Essentially free", as used in this context, means that the dispersion and/or composition contains less than 5 wt.-% of the given component, preferably less than 2 wt.-%, more preferably less than 1 wt.-%.

The adhesives containing the dispersions described herein show good adhesive strength, while being solvent free and thus environmentally friendly. Moreover, the adhesives provide flame retardant properties.

The adhesives can be applied to the substrate by all known techniques, including without limitation, spraying, painting, dip-coating, spin-coating, printing and the like.

It is understood that all embodiments disclosed herein in relation to the methods are similarly applicable to the disclosed dispersions, compositions, and uses and vice versa.

The following examples are given to illustrate the present invention. Because these examples are given for illustrative purposes only, the invention should not be deemed limited thereto.

### Examples

### Example 1:

### High-shear process

Realkyd XTR20112 polyester polyol (72 g, Mₙ = 2000 g/mol), Pluronic PE3500 nonionic stabilizer (14.55 g) and DMPA anionic stabilizer (4.82 g) were placed in a 500 mL three necked round bottom flask equipped with a condenser and a mechanical stirrer. The mixture was heated to 70 °C. At this temperature, the solid components melted and a homogeneous mixture was obtained. At this point, high vacuum was applied (< 0.1 mbar) while the temperature was set to 70 °C in order to remove water. The mixture was left stirring under vacuum at 70 °C for few hours.

After that, vacuum was stopped and flask was flushed with Argon. The temperature was decreased to 60 °C and GAE (3-Allyloxy-1,2-propanediol, 1.2 g) was added to the mixture, and then IPDI (isophorone diisocyanate, 26.91 g) was also added.

Then, the first portion of the catalyst (dimethyldineodecanoatetin, 20 mg of a freshly prepared Tin catalyst / acetone, 1:1 mixture) was added. Upon addition of the catalyst, the temperature raised rapidly. When the temperature increase stopped (at around 80 °C), the heating was set to 80 °C and once at this temperature, it was stirred for 1 hour and a second identical portion of catalyst solution was added.

The reaction mixture was left stirring at 80 °C during 3h and NCO content was measured: 2.4% NCO, indicates the reaction is complete. Then an organic solution of butyl acrylate (88.5 g), butyl methacrylate (88.5 g) and Disflamoll DPK (diphenyl tolyl phosphate, 147.5 g) was added to dissolve the prepolymer, and 10 minutes later triethylamine (TEA, 3.27 g) was added for neutralization. This mixture was mixed very well at 50-60 °C for 30 min.

Emulsification was then carried out as follows: The total amount of warm prepolymer/acrylate mixture was mixed with warm water to obtain a mixture 48/52 of organic phase/water (480 g) that was preemulsified with the ultra-turrax (15000 rpm, 5 minutes).The preemulsion obtained was passed 4 times through the high pressure homogenizer (Microfluidizer from Microfluidics) at 10000psi working pressure and an emulsion with low viscosity was obtained.

Then, the chain extension was performed; the resulting emulsion was placed in a round bottom flask with mechanical stirrer and Isophorone diamine was added until no NCO was detected in IR spectrum.

Then, the polymerization of the emulsion was performed as follows: Once the chain extension was finished, a reflux condenser was set up on the reaction flask and FeSO₄ heptahydrate (0.01 g) was added to emulsion that was then heated to 55 °C. Then, the initiator system (Formamidine sulfinic acid (2% aq. solution, 35 g) and tert-butyl hydroperoxide (6% aq. solution, 17.5 g) were carefully added simultaneously to the reaction mixture taking care that the temperature of the reaction does not get above 57-58 °C. When the polymerization was finished, it was stirred at 55 °C for 1 hour and the resulting dispersions was left overnight to cool down at room temperature.

Next day, dispersion was filtered and particle size was measured. No coagulum was observed on the filter. A particle size of 180 nm and a PDI of 0.160 were recorded in DLS (Dynamic light scattering) Malvern Mastersizer.

### Example 2:

### High-shear process

Realkyd XTR20112 polyester polyol (72 g), nonionic stabilizer Pluronic PE3500 (BASF, 14.55 g) and DMPA anionic stabilizer (4.82 g) were placed in a 500 mL three necked round bottom flask equipped with a condenser and a mechanical stirrer. The mixture was heated to 70 °C. At this temperature, the solid components melted and a homogeneous mixture was obtained. At this point, high vacuum was applied (< 0.1 mbar) while the temperature was set to 70 °C in order to remove water. The mixture was left stirring under vacuum at 70 °C for few hours.

After that, vacuum was stopped and flask was flushed with Argon. The temperature was decreased to 60 °C and GAE (3-Allyloxy-1,2-propanediol, 1.2 g) was added to the mixture, and then IPDI (isophorone diisocyanate, 26.91 g) was also added.

Then, the first portion of the catalyst (dimethyldineodecanoatetin, 20 mg of a freshly prepared Tin catalyst / acetone, 1:1 mixture) was added. Upon addition of the catalyst, the temperature raised rapidly. When the temperature increase stopped (at around 80 °C), the heating was set to 80 °C and once at this temperature, it was stirred for 1 hour and a second identical portion of catalyst solution was added.

The reaction mixture was left stirring at 80 °C during 3h and NCO content was measured: 2.4% NCO, indicates the reaction is complete.

Then, an organic solution of butyl acrylate (88.5 g), butyl methacrylate (88.5 g) and Emerald Innovation NH-1 (147.5 g, organophosphate flame retardant from Great Lakes) was added to dissolve the prepoymer, and 10 minutes later, triethylamine (TEA, 3.27 g) was added for neutralization. This mixture was mixed very well at 50-60°C for 30min.

Then, emulsification was then carried out as follows: The total amount of warm prepolymer/acrylate mixture was mixed with warm water to obtain a mixture 48/52 of organic phase/water (480 g) that was preemulsified with the ultra-turrax (15000 rpm, 5 minutes).

The preemulsion obtained was passed 4 times through the high pressure homogenizer (Microfluidizer from Microfluidics) at 10000psi working pressure and an emulsion with low viscosity was obtained.

Then, the chain extension was performed; the resulting emulsion was placed in a round bottom flask with mechanical stirrer and Isophorone diamine was added until no NCO was detected in IR spectrum.

Then, polymerization of the emulsion was conducted as follows: Once the chain extension was finished, a reflux condenser was set up on the reaction flask and FeSO₄ heptahydrate (0.01 g) as added to emulsion that was then heated to 55 °C. Then, the initiator system (Formamidine sulfinic acid (2% aq. solution, 35 g) and tert-butyl hydroperoxide (6% aq. solution, 17.5 g) were carefully added simultaneously to the reaction mixture taking care that the temperature of the reaction does not get above 57-58 °C. When the polymerization was finished, it was stirred at 55 °C for 1 hour and the resulting dispersions was left overnight to cool down at room temperature.

Next day, dispersion was filtered and particle size was measured. No coagulum was observed on the filter. A particle size of 115 nm and a PDI of 0.097 were recorded in DLS (Dynamic light scattering) Malvern Mastersizer.

### Example 3:

### High-shear process

Realkyd XTR20112 polyester polyol (72 g), nonionic stabilizer Pluronic PE3500 (14.55 g) and anionic stabilizer DMPA (4.82 g) were placed in a 500 mL three necked round bottom flask equipped with a condenser and a mechanical stirrer. The mixture was heated to 70 °C. At this temperature, the solid components melted and a homogeneous mixture was obtained. At this point, high vacuum was applied (< 0.1 mbar) while the temperature was set to 70 °C in order to remove water. The mixture was left stirring under vacuum at 70 °C for few hours.

After that, vacuum was stopped and flask was flushed with Argon. The temperature was decreased to 60 °C and GAE (3-Allyloxy-1,2-propanediol, 1.2 g) was added to the mixture, and then IPDI (isophorone diisocyanate, 26.91 g) was also added.

Then, the first portion of the catalyst (dimethyldineodecanoatetin, 20 mg of a freshly prepared Tin catalyst / acetone, 1:1 mixture) was added. Upon addition of the catalyst, the temperature raised rapidly. When the temperature increase stopped (at around 80 °C), the heating was set to 80 °C and once at this temperature, it was stirred for 1 hour and a second identical portion of catalyst solution was added. The reaction mixture was left stirring at 80 °C during 3h and NCO content was measured: 2.4% NCO, indicates the reaction is complete.

Then an organic solution of butyl acrylate (88.5 g), butyl methacrylate (88.5 g) and 1,2-di-[2-ethylhexylcarboxylate]-3,4,5,6-tetrabromobenzene (147.5 g) was added to dissolve the prepoymer, and 10 minutes later, triethylamine (TEA, 3.27 g) was added for neutralization. This mixture was mixed very well at 50-60 °C for 30 min.

Emulsification was then carried out as follows: The total amount of warm prepolymer/acrylate mixture was mixed with warm water to obtain a mixture 48/52 of organic phase/water (480 g) that was preemulsified with the ultra-turrax (15000 rpm, 5 minutes). The preemulsion obtained was passed 4 times through the high pressure homogenizer (Microfluidizer from Microfluidics) at 10000psi working pressure and an emulsion with low viscosity was obtained.

Then, the chain extension was performed; the resulting emulsion was placed in a round bottom flask with mechanical stirrer and Isophorone diamine was added until no NCO was detected in IR spectrum.

Then, polymerization of the emulsion was carried out as follows: Once the chain extension was finished, a reflux condenser was set up on the reaction flask and FeSO₄ heptahydrate (0.01 g) was added to emulsion that was then heated to 55 °C. Then, the initiator system (Formamidine sulfinic acid (2% aq. solution, 35g) and tert-butyl hydroperoxide (6% aq. solution, 17.5 g) were carefully added simultaneously to the reaction mixture taking care that the temperature of the reaction does not get above 57-58 °C. When the polymerization was finished, it was stirred at 55 °C for 1 hour and the resulting dispersions was left overnight to cool down at room temperature. Next day, dispersion was filtered and particle size was measured. No coagulum was observed on the filter. A particle size of 205 nm and a PDI of 0.05 were recorded in DLS (Dynamic light scattering) Malvern Mastersizer.

### Example 4:

### High-shear process

Kuraray C2050 polycarbonate polyol (90 g, Mₙ = 2000 g/mol, Kuraray Co., Ltd.), nonionic stabilizer Pluronic PE3500 (13 g) and anionic stabilizer DMPA (6 g) were placed in a 500mL three necked round bottom flask equipped with a condenser and a mechanical stirrer. The mixture was heated to 70 °C. At this temperature, the solid components melted and a homogeneous mixture was obtained. At this point, high vacuum was applied (< 0.1 mbar) while the temperature was set to 70 °C in order to remove water. The mixture was left stirring under vacuum at 70 °C for few hours.

After that, vacuum was stopped and flask was flushed with Argon. The temperature was decreased to 60 °C and GAE (3-Allyloxy-1,2-propanediol, 1.57 g) was added to the mixture, and then IPDI (isophorone diisocyanate, 31.9 g) was also added.

Then, the first portion of the catalyst (dimethyldineodecanoatetin, 40 mg of a freshly prepared Tin catalyst / acetone, 1:1 mixture) was added. Upon addition of the catalyst, the temperature raised rapidly. When the temperature increase stopped (at around 80 °C), the heating was set to 80 °C and once at this temperature, it was stirred for 1 hour and a second identical portion of catalyst solution was added. The reaction mixture was left stirring at 80 °C during 3h and NCO content was measured: 2% NCO, indicates the reaction is complete.

Then, an organic solution of butyl acrylate (105.7g), butyl methacrylate (105.7 g) and diphenyl tolyl phosphate (176 g) was added to dissolve the prepoymer, and 10 minutes later, triethylamine (TEA, 4 g) was added for neutralization. This mixture was mixed very well at 50-60 °C for 30 min.

Emulsification was then carried out as follows: The total amount of warm prepolymer/acrylate mixture was mixed with warm water to obtain a mixture 47/53 of organic phase/water (596 g) that was preemulsified with the ultra-turrax (15000 rpm, 5 minutes).

The preemulsion obtained was passed 4 times through the high pressure homogenizer (Microfluidizer from Microfluidics) at 10000psi working pressure and an emulsion with low viscosity was obtained.

Then, the chain extension was performed; the resulting emulsion was placed in a round bottom flask with mechanical stirrer and Isophorone diamine was added until no NCO was detected in IR spectrum.

Them, polymerization of the emulsions was conducted as follows: Once the chain extension was finished, a reflux condenser was set up on the reaction flask and FeSO₄ heptahydrate (0.01g) was added to emulsion that was then heated to 55 °C. Then, the initiator system (Formamidine sulfinic acid (2% aq. solution, 35g) and tert-butyl hydroperoxide (6% aq. solution, 17.5 g) were carefully added simultaneously to the reaction mixture taking care that the temperature of the reaction does not get above 57-58 °C. When the polymerization was finished, it was stirred at 55 °C for 1 hour and the resulting dispersions was left overnight to cool down at room temperature. Next day, dispersion was filtered and particle size was measured. No coagulum was observed on the filter. A particle size of 285 nm and a PDI of 0.252 were recorded in DLS (Dynamic light scattering) Malvern Mastersizer.

### Example 5:

### High-shear process

Kuraray C2050 polycarbonate polyol (90 g, Kuraray Co., Ltd.), nonionic stabilizer Pluronic PE3500 (13 g) and ionic stabilizer DMPA (6 g) were placed in a 500 mL three necked round bottom flask equipped with a condenser and a mechanical stirrer. The mixture was heated to 70 °C. At this temperature, the solid components melted and a homogeneous mixture was obtained. At this point, high vacuum was applied (< 0.1 mbar) while the temperature was set to 70 °C in order to remove water. The mixture was left stirring under vacuum at 70 °C for few hours.

After that, vacuum was stopped and flask was flushed with Argon. The temperature was decreased to 60 °C and GAE (3-Allyloxy-1,2-propanediol, 1.57 g) was added to the mixture, and then IPDI (isophorone diisocyanate, 31.9 g) was also added.

Then, the first portion of the catalyst (dimethyldineodecanoatetin, 40 mg of a freshly prepared Tin catalyst / acetone, 1:1 mixture) was added. Upon addition of the catalyst, the temperature raised rapidly. When the temperature increase stopped (at around 80 °C), the heating was set to 80 °C and once at this temperature, it was stirred for 1 hour and a second identical portion of catalyst solution was added. The reaction mixture was left stirring at 80°C during 3h and NCO content was measured: 2% NCO, indicates the reaction is complete.

Then, an organic solution of butyl acrylate (105.7 g), butyl methacrylate (105.7 g) and Emerald Innovation NH-1 (176 g, organophosphate flame retardant from Great Lakes) was added to dissolve the prepolymer and 10 minutes later, triethylamine (TEA, 4 g) was added for neutralization. This mixture was mixed very well at 50-60 °C for 30 min.

Emulsification was then carried out as follows: The total amount of warm prepolymer/acrylate mixture was mixed with warm water to obtain a mixture 47/53 of organic phase/water (596 g) that was preemulsified with the ultra-turrax (15000 rpm, 5 minutes). The preemulsion obtained was passed 4 times through the high pressure homogenizer (Microfluidizer from Microfluidics) at 10000psi working pressure and an emulsion with low viscosity was obtained.

Then, the chain extension was performed; the resulting emulsion was placed in a round bottom flask with mechanical stirrer and Isophorone diamine was added until no NCO was detected in IR spectrum.

Then, polymerization of the emulsion was conducted as follows: Once the chain extension was finished, a reflux condenser was set up on the reaction flask and FeSO₄ heptahydrate (0.01g) was added to emulsion that was then heated to 55 °C. Then, the initiator system (Formamidine sulfinic acid (2% aq. solution, 35g) and tert-butyl hydroperoxide (6% aq. solution, 17.5 g) were carefully added simultaneously to the reaction mixture taking care that the temperature of the reaction does not get above 57-58 °C. When the polymerization was finished, it was stirred at 55 °C for 1 hour and the resulting dispersions was left overnight to cool down at room temperature. Next day, dispersion was filtered and particle size was measured. No coagulum was observed on the filter. A particle size of 245 nm and a PDI of 0.154 were recorded in DLS (Dynamic light scattering) Malvern Mastersizer.

### Example 6:

### Non high-shear process

Realkyd XTR20112 polyester polyol (36 g), nonionic stabilizer Pluronic PE3500 (8 g) and anionic stabilizer DMPA (6 g) were placed in a 500 mL three necked round bottom flask equipped with a condenser and a mechanical stirrer. The mixture was heated to 70 °C. At this temperature, the solid components melted and a homogeneous mixture was obtained. At this point, high vacuum was applied (< 0.1 mbar) while the temperature was set to 70 °C in order to remove water. The mixture was left stirring under vacuum at 70°C for few hours.

After that, vacuum was stopped and flask was flushed with Argon. The temperature was decreased to 60 °C and GAE (3-Allyloxy-1, 2-propanediol, 0.6 g) was added to the mixture, and then IPDI (isophorone diisocyanate, 22.5 g) was also added.

Then, the first portion of the catalyst (dimethyldineodecanoatetin, 20 mg of a freshly prepared Tin catalyst / acetone, 1:1 mixture) was added. Upon addition of the catalyst, the temperature raised rapidly. When the temperature increase stopped (at around 80 °C), the heating was set to 80 °C and once at this temperature, it was stirred for 1 hour and a second identical portion of catalyst solution was added. The reaction mixture was left stirring at 80 °C during 3h and NCO content was measured: 3.4% NCO indicates the reaction is complete.

Then, an organic solution of butyl acrylate (82 g) was added to dissolve the prepolymer, and 20 minutes later, triethylamine (TEA, 4 g) was added for neutralization. Then, a resorcinol-bridged phosphoric acid (CR-733S, 44 g) was added. This mixture was mixed very well at 50-60 °C for 10 min.

Emulsification was then carried out as follows: The total amount of warm prepolymer/acrylate mixture was mixed with warm water (50-60°C) to obtain a mixture 47/53 of organic phase/water (229 g) by using a normal mechanical stirrer at 500-700 rpm for 10-15 min.

Then, the dispersion was allowed to cool down at room temperature and the chain extension was performed; the resulting emulsion was placed in a round bottom flask with mechanical stirrer and Isophorone diamine was added until no NCO was detected in IR spectrum.

Then, polymerization of the emulsion was conducted as follows: Once the chain extension was finished, a reflux condenser was set up on the reaction flask and FeSO₄ heptahydrate (0.01g) was added to emulsion that was then heated to 55 °C. Then, the initiator system (Formamidine sulfinic acid (2% aq. solution, 8 g) and tert-butyl hydroperoxide (6% aq. solution, 4 g) were carefully added simultaneously to the reaction mixture taking care that the temperature of the reaction does not get above 57-58 °C. When the polymerization was finished, it was stirred at 55 °C for 1 hour and the resulting dispersions was left overnight to cool down at room temperature.

Next day, dispersion was filtered and particle size was measured. No coagulum was observed on the filter. A particle size of 195 nm and a PDI of 0.170 were recorded in DLS (Dynamic light scattering) Malvern Mastersizer.

### Example 7:

### Non high-shear process

Realkyd XTR20112 polyester polyol (36 g), nonionic stabilizer Pluronic PE3500 (8 g) and anionic stabilizer DMPA (6 g) were placed in a 500 mL three necked round bottom flask equipped with a condenser and a mechanical stirrer. The mixture was heated to 70 °C. At this temperature, the solid components melted and a homogeneous mixture was obtained. At this point, high vacuum was applied (< 0.1 mbar) while the temperature was set to 70 °C in order to remove water. The mixture was left stirring under vacuum at 70°C for few hours.

After that, vacuum was stopped and flask was flushed with Argon. The temperature was decreased to 60°C and GAE (3-Allyloxy-1, 2-propanediol, 0.6 g) was added to the mixture, and then IPDI (isophorone diisocyanate, 22.5 g) was also added. Then, the first portion of the catalyst (dimethyldineodecanoatetin, 20 mg of a freshly prepared Tin catalyst / acetone, 1:1 mixture) was added. Upon addition of the catalyst, the temperature raised rapidly. When the temperature increase stopped (at around 80 °C), the heating was set to 80 °C and once at this temperature, it was stirred for 1 hour and a second identical portion of catalyst solution was added. The reaction mixture was left stirring at 80 °C during 3 h and NCO content was measured: 3.4% NCO indicates the reaction is complete.

Then, an organic solution of butyl acrylate (82 g) was added to dissolve the prepolymer, and 20 minutes later, triethylamine (TEA, 4 g) was added for neutralization. Then, Bisphenyl a bis(diphenyl phosphate) (CR-741, 44 g) was added. This mixture was mixed very well at 50-60 °C for 10 min.

Emulsification was then carried out as follows: The total amount of warm prepolymer/acrylate mixture was mixed with warm water (50-60 °C) to obtain a mixture 47/53 of organic phase/water (229 g) by using a normal mechanical stirrer at 500-700 rpm for 10-15 min. Then, the dispersion was allowed to cool down at room temperature and the chain extension was performed; the resulting emulsion was placed in a round bottom flask with mechanical stirrer and Isophorone diamine was added until no NCO was detected in IR spectrum.

Then, polymerization of the emulsions was conducted as follows: Once the chain extension was finished, a reflux condenser was set up on the reaction flask and FeSO₄ heptahydrate (0.01g) was added to emulsion that was then heated to 55 °C. Then, the initiator system (Formamidine sulfinic acid (2% aq. solution, 8 g) and tert-butyl hydroperoxide (6% aq. solution, 4 g) were carefully added simultaneously to the reaction mixture taking care that the temperature of the reaction does not get above 57-58 °C. When the polymerization was finished, it was stirred at 55 °C for 1 hour and the resulting dispersions was left overnight to cool down at room temperature. Next day, dispersion was filtered and particle size was measured. No coagulum was observed on the filter. A particle size of 215 nm and a PDI of 0.228 were recorded in DLS (Dynamic light scattering) Malvern Mastersizer.

### Example 8:

### Non high-shear process

Realkyd XTR20112 polyester polyol (36 g), nonionic stabilizer Pluronic PE3500 (8 g) and anionic stabilizer DMPA (6 g) were placed in a 500 mL three necked round bottom flask equipped with a condenser and a mechanical stirrer. The mixture was heated to 70 °C. At this temperature, the solid components melted and a homogeneous mixture was obtained. At this point, high vacuum was applied (< 0.1 mbar) while the temperature was set to 70 °C in order to remove water. The mixture was left stirring under vacuum at 70 °C for few hours.

After that, vacuum was stopped and flask was flushed with Argon. The temperature was decreased to 60°C and GAE (3-Allyloxy-1, 2-propanediol, 0.6 g) was added to the mixture, and then IPDI (isophorone diisocyanate, 22.5 g) was also added.

Then, the first portion of the catalyst (dimethyldineodecanoatetin, 20 mg of a freshly prepared Tin catalyst / acetone, 1:1 mixture) was added. Upon addition of the catalyst, the temperature raised rapidly. When the temperature increase stopped (at around 80 °C), the heating was set to 80 °C and once at this temperature, it was stirred for 1 hour and a second identical portion of catalyst solution was added. The reaction mixture was left stirring at 80 °C during 3 h and NCO content was measured: 3.4% NCO indicates the reaction is complete.

Then, an organic solution of butyl acrylate (82 g) was added to dissolve the prepolymer, and 20 minutes later, triethylamine (TEA, 4 g) was added for neutralization. Then, benzene-1,3-diyl tetraphenyl bis(phosphate) (CR-733S, 77.5 g) was added. This mixture was mixed very well at 50-60 °C for 10 min.

Emulsification was then carried out as follows: The total amount of warm prepolymer/acrylate mixture was mixed with warm water (50-60 °C) to obtain a mixture 48/52 of organic phase/water (251 g) by using a normal mechanical stirrer at 500-700 rpm for 10-15 min. Then, the dispersion was allowed to cool down at room temperature and the chain extension was performed; the resulting emulsion was placed in a round bottom flask with mechanical stirrer and Isophorone diamine was added until no NCO was detected in IR spectrum.

Polymerization of the emulsions was conducted as follows: Once the chain extension was finished, a reflux condenser was set up on the reaction flask and FeSO₄ heptahydrate (0.01g) was added to emulsion that was then heated to 55 °C. Then, the initiator system (Formamidine sulfinic acid (2% aq. solution, 8 g) and tert-butyl hydroperoxide (6% aq. solution, 4 g) were carefully added simultaneously to the reaction mixture taking care that the temperature of the reaction does not get above 57-58 °C. When the polymerization was finished, it was stirred at 55 °C for 1 h and the resulting dispersions was left overnight to cool down at room temperature.

Next day, dispersion was filtered and particle size was measured. No coagulum was observed on the filter. A particle size of 230 nm and a PDI of 0.251 were recorded in DLS (Dynamic light scattering) Malvern Mastersizer.

### Example 9:

### Non high-shear process

Realkyd XTR20112 polyester polyol (36 g), nonionic stabilizer Pluronic PE3500 (8 g) and anionic stabilizer DMPA (6 g) were placed in a 500 mL three necked round bottom flask equipped with a condenser and a mechanical stirrer. The mixture was heated to 70 °C. At this temperature, the solid components melted and a homogeneous mixture was obtained. At this point, high vacuum was applied (< 0.1 mbar) while the temperature was set to 70 °C in order to remove water. The mixture was left stirring under vacuum at 70 °C for few hours.

After that, vacuum was stopped and flask was flushed with Argon. The temperature was decreased to 60 °C and GAE (3-Allyloxy-1, 2-propanediol, 0.6 g) was added to the mixture, and then IPDI (isophorone diisocyanate, 22.5 g) was also added.

Then, the first portion of the catalyst (dimethyldineodecanoatetin, 20 mg of a freshly prepared Tin catalyst / acetone, 1:1 mixture) was added. Upon addition of the catalyst, the temperature raised rapidly. When the temperature increase stopped (at around 80 °C), the heating was set to 80 °C and once at this temperature, it was stirred for 1 hour and a second identical portion of catalyst solution was added. The reaction mixture was left stirring at 80 °C during 3 h and NCO content was measured: 3.4% NCO indicates the reaction is complete.

Then, an organic solution of butyl acrylate (82 g) was added to dissolve the prepolymer, and 20 minutes later, triethylamine (TEA, 4 g) was added for neutralization. Then, bisphenol A bis(diphenylphosphate) (CR-741, 77.5 g) was added. This mixture was mixed very well at 50-60 °C for 10 min.

Emulsification was then carried out: The total amount of warm prepolymer/acrylate mixture was mixed with warm water (50-60 °C) to obtain a mixture 48/52 of organic phase/water (251 g) by using a normal mechanical stirrer at 500-700 rpm for 10-15 min.

Then, the dispersion was allowed to cool down at room temperature and the chain extension was performed; the resulting emulsion was placed in a round bottom flask with mechanical stirrer and Isophorone diamine was added until no NCO was detected in IR spectrum.

Polymerization of the emulsions was conducted as follows: Once the chain extension was finished, a reflux condenser was set up on the reaction flask and FeSO₄ heptahydrate (0.01 g) was added to emulsion that was then heated to 55 °C. Then, the initiator system (Formamidine sulfinic acid (2% aq. solution, 8 g) and tert-butyl hydroperoxide (6% aq. solution, 4 g) were carefully added simultaneously to the reaction mixture taking care that the temperature of the reaction does not get above 57-58 °C. When the polymerization was finished, it was stirred at 55 °C for 1 hour and the resulting dispersions was left overnight to cool down at room temperature.

Next day, dispersion was filtered and particle size was measured. No coagulum was observed on the filter. A particle size of 262 nm and a PDI of 0.22 were recorded in DLS (Dynamic light scattering) Malvern Mastersizer.

### Example 10:

### Non high-shear process

Realkyd XTR20112 polyester polyol (36 g), nonionic stabilizer Pluronic PE3500 (8 g) and anionic stabilizer DMPA (6 g) were placed in a 500 mL three necked round bottom flask equipped with a condenser and a mechanical stirrer. The mixture was heated to 70 °C. At this temperature, the solid components melted and a homogeneous mixture was obtained. At this point, high vacuum was applied (< 0.1 mbar) while the temperature was set to 70 °C in order to remove water. The mixture was left stirring under vacuum at 70 °C for few hours.

After that, vacuum was stopped and flask was flushed with Argon. The temperature was decreased to 60 °C and GAE (3-Allyloxy-1, 2-propanediol, 0.6 g) was added to the mixture, and then IPDI (isophorone diisocyanate, 22.5 g) was also added.

Then, the first portion of the catalyst (dimethyldineodecanoatetin, 20 mg of a freshly prepared Tin catalyst / acetone, 1:1 mixture) was added. Upon addition of the catalyst, the temperature raised rapidly. When the temperature increase stopped (at around 80 °C), the heating was set to 80 °C and once at this temperature, it was stirred for 1 hour and a second identical portion of catalyst solution was added. The reaction mixture was left stirring at 80 °C during 3 h and NCO content was measured: 3.4% NCO indicates the reaction is complete.

Then, an organic solution of ethyl acrylate (82 g) was added to dissolve the prepolymer, and 20 minutes later, triethylamine (TEA, 4 g) was added for neutralization. Then, benzene-1,3-diyl tetraphenyl bis(phosphate) (CR-733S, 44 g) was added. This mixture was mixed very well at 50-60 °C for 10 min.

Emulsification was then carried out as follows: The total amount of warm prepolymer/acrylate mixture was mixed with warm water (50-60 °C) to obtain a mixture 47/53 of organic phase/water (229 g) by using a normal mechanical stirrer at 500-700 rpm for 10-15 min. Then, the dispersion was allowed to cool down at room temperature and the chain extension was performed; the resulting emulsion was placed in a round bottom flask with mechanical stirrer and isophorone diamine was added until no NCO was detected in IR spectrum.

Then, polymerization of the emulsion was conducted as follows: Once the chain extension was finished, a reflux condenser was set up on the reaction flask and FeSO₄ heptahydrate (0.01 g) was added to emulsion that was then heated to 55 °C. Then, the initiator system (Formamidine sulfinic acid (2% aq. solution, 8 g) and tert-butyl hydroperoxide (6% aq. solution, 4 g) were carefully added simultaneously to the reaction mixture taking care that the temperature of the reaction does not get above 57-58 °C. When the polymerization was finished, it was stirred at 55 °C for 1 hour and the resulting dispersions were left overnight to cool down at room temperature.

Next day, dispersion was filtered and particle size was measured. No coagulum was observed on the filter. A particle size of 244 nm and a PDI of 0.125 were recorded in DLS (Dynamic light scattering) Malvern Mastersizer.

### Example 11:

### Non high-shear process

Realkyd XTR20112 polyester polyol (36 g), nonionic stabilizer Pluronic PE3500 (8 g) and anionic stabilizer DMPA (6 g) were placed in a 500 mL three necked round bottom flask equipped with a condenser and a mechanical stirrer. The mixture was heated to 70 °C. At this temperature, the solid components melted and a homogeneous mixture was obtained. At this point, high vacuum was applied (< 0.1 mbar) while the temperature was set to 70 °C in order to remove water. The mixture was left stirring under vacuum at 70 °C for few hours. After that, vacuum was stopped and flask was flushed with Argon. The temperature was decreased to 60 °C and GAE (3-Allyloxy-1, 2-propanediol, 0.6 g) was added to the mixture, and then IPDI (isophorone diisocyanate, 22.5 g) was also added.

Then, the first portion of the catalyst (dimethyldineodecanoatetin, 20 mg of a freshly prepared Tin catalyst / acetone, 1:1 mixture) was added. Upon addition of the catalyst, the temperature raised rapidly. When the temperature increase stopped (at around 80 °C), the heating was set to 80 °C and once at this temperature, it was stirred for 1 hour and a second identical portion of catalyst solution was added. The reaction mixture was left stirring at 80 °C during 3 h and NCO content was measured: 3.4% NCO indicates the reaction is complete.

Then, an organic solution of butyl acrylate (82 g) was added to dissolve the prepolymer, and 20 minutes later, triethylamine (TEA, 4 g) was added for neutralization. Then, Emerald Innovation NH-1 (77.5 g, organophosphate flame retardant from Great Lakes) was added. This mixture was mixed very well at 50-60 °C for 10 min.

Emulsification was then carried out as follows: The total amount of warm prepolymer/acrylate mixture was mixed with warm water (50-60 °C) to obtain a mixture 48/52 of organic phase/water (251 g) by using a normal mechanical stirrer at 500-700 rpm for 10-15 min. Then, the dispersion was allowed to cool down at room temperature and the chain extension was performed; the resulting emulsion was placed in a round bottom flask with mechanical stirrer and isophorone diamine was added until no NCO was detected in IR spectrum.

Polymerization of the emulsion was conducted out: Once the chain extension was finished, a reflux condenser was set up on the reaction flask and FeSO₄ heptahydrate (0.01 g) was added to emulsion that was then heated to 55 °C. Then, the initiator system (Formamidine sulfinic acid (2% aq. solution, 8 g) and tert-butyl hydroperoxide (6% aq. solution, 4 g) were carefully added simultaneously to the reaction mixture taking care that the temperature of the reaction does not get above 57-58 °C. When the polymerization was finished, it was stirred at 55 °C for 1 h and the resulting dispersions was left overnight to cool down at room temperature.

Next day, dispersion was filtered and particle size was measured. No coagulum was observed on the filter. A particle size of 228 nm and a PDI of 0.198 were recorded in DLS (Dynamic light scattering) Malvern Mastersizer.

### Flammability tests:

The dispersions obtained above were applied to a metallized PET film and dried for 2 minutes at 80°C. Then, an uncoated Mylar 2 mil film was applied on the adhesive layer. The sample was measure by German DIN 4102 (B1) flammability testing standards, according to which a material is classified as B1 if it fulfils the requirements of a B2-test. The specimen is put on a specimen holder that is hung in a test cabinet. A burner flame is applied to it for 15 seconds. The time to reach a marked point is measured. The data are shown in Table 1.

**Table 1. B2 flammability results**

| Sample | Test type | Results |
|---|---|---|
| Example 1 | B2 test | Passed |
| Example 2 | B2 test | Passed |
| Example 3 | B2 test | Passed |
| Example 4 | B2 test | Passed |
| Example 5 | B2 test | Passed |
| Example 6 | B2 test | Passed |
| Example 7 | B2 test | Passed |
| Example 8 | B2 test | Passed |
| Example 9 | B2 test | Passed |
| Example 10 | B2 test | Passed |
| Example 11 | B2 test | Passed |

| | | |
|---|---|---|
| *Passed: self-extinguished below the maximum burning distance allowed of 15 cm. | | |

## Claims

1. Process for manufacturing an aqueous polyurethane acrylate hybrid polymer dispersion comprising at least one hydrophobic flame retardant, the process including:
(1) forming an NCO-terminated, vinyl-functionalized polyurethane prepolymer with a number average molecular weight Mₙ in the range of 2000 g/mol to 10000 g/mol, preferably of 3000 g/mol to 8000 g/mol, more preferably of 4000 g/mol to 5000 g/mol from a reaction mixture comprising or consisting of:
(a) at least one polyol with a number average molecular weight Mₙ in the range of 400 to 4000 g/mol, preferably 400 g/mol to 3000 g/mol, wherein said polyol is a non-functionalized polyol containing no functional groups besides the hydroxyl groups;
(b) at least one vinyl-functionalized polyol, preferably an allyl-functionalized polyol, wherein the at least one vinyl-functionalized polyol comprises at least two hydroxyl groups and at least one vinyl group;
(c) at least one anionic stabilizer, wherein the at least one anionic stabilizer comprises at least two hydroxyl groups and at least one negatively charged functional group, preferably a carboxyl or sulfonic acid group;
(d) at least one polyisocyanate, preferably at least one aliphatic di- and/or triisocyanate, wherein the at least one polyisocyanate is used in molar excess with respect fo the molar ratio of the isocyanate groups to the hydroxy groups of the other components of the reaction mixture to obtain an NCO-terminated, vinyl-functionalized polyurethane prepolymer;
(2) dissolving the prepolymer obtained in step (1) in
(a) at least one acrylic monomer and subsequently adding the at least one hydrophobic flame retardant to the prepolymer/acrylic monomer mixture, or
(b) a mixture comprising at least one hydrophobic flame retardant and at least one acrylic monomer,
to obtain a prepolymer/acrylic monomer/hydrophobic flame retardant mixture;
(3) dispersing the prepolymer/acrylic monomer/hydrophobic flame retardant mixture into a continuous aqueous phase to obtain an emulsion;
(4) reacting the prepolymer with at least one chain extension agent; and
(5) polymerizing the vinyl groups of the prepolymer and the at least one acrylic monomer to obtain the polyurethane acrylate hybrid polymer dispersion.

2. The process according to claim 1, wherein the at least one polyol is selected from polyether polyols, polyester polyols, polycarbonate polyols and mixtures thereof.

3. The process according to claim 1 or 2, wherein the amount of the prepolymer and the at least one acrylic monomer is selected such that the weight proportion of polyurethane to acrylic in the hybrid polymer is 30:70 to 70:30, preferably 40:60 to 50:50.

4. The process according to any one of claims 1 to 3, wherein the process further comprises adding an organic co-solvent to the prepolymer/acrylic monomer mixture obtained in step (2) and dispersing the prepolymer/acrylic monomer/co-solvent mixture into a continuous aqueous phase and removing the co-solvent, preferably by vacuum distillation, after step (5).

5. The process according to claim 4, wherein
(i) the co-solvent is acetone; and/or
(ii) the co-solvent is used in an amount of up to 50 wt.-% based on the total weight of the prepolymer/acrylic monomer/co-solvent mixture.

6. The process according to any one of claims 1 to 5, wherein the vinyl-functionalized polyol
(i) is a vinyl group-containing diol; and/or
(ii) is an allyl-functionalized polyol, preferably an polyol allyl ether, wherein the polyol allyl ether is preferably selected from monoethers of allyl alcohol with a polyol having three or more hydroxyl groups, preferably glycerol; and/or
(iii) is a monomeric polyol; and/or
(iv) has a number average molecular weight Mₙ less than 400 g/mol.

7. The process according to any one of claims 1 to 6, wherein each of the at least one acrylic monomers is selected from acrylate monomers, methacrylate monomers and mixtures thereof, preferably hydrophobic acrylate monomers, methacrylate monomers and mixtures thereof, more preferably esters of (meth)acrylic acid with mono alcohols having 4 to 20, preferably 4 to 12 carbon atoms.

8. The process according to any one of claims 1 to 7, wherein the reaction mixture is free of
(1) surfactants; and/or
(2) aromatic organic compounds.

9. The process according to any one of claims 1 to 8, wherein
(i) the at least one anionic stabilizer comprises a sulfonated polyglycol and/or 2,2-bis(hydroxymethyl)propionic acid (DMPA); and/or
(ii) wherein the reaction mixture further comprises at least one nonionic stabilizer, said at least one nonionic stabilizer preferably
(1) having a HLB (hydrophile lipophile balance) value between 6 and 19, preferably between 8 and 18; and/or
(2) being selected from monomeric diols, preferably ethylene glycol, propylene glycol, butylene glycol, neopentyl glycol, or polymers thereof, preferably polyethylene glycol, polypropylene glycol, and polybutylene glycol and copolymers of ethylene glycol, propylene glycol, and butylene glycol, more preferably of ethylene glycol and propylene glycol; and/or
(3) having an average molecular weight M_{w} of up to about 4000 g/mol, preferably up to about 3000 g/mol, more preferably up to about 2000 g/mol.

10. The process according to any one of claims 1 to 9, wherein
(1) the at least one flame retardant is selected from the group consisting of organohalogen flame retardants, organophosphorous flame retardants, and mixtures thereof, preferably selected from the group consisting of 1,2-di-[2-ethylhexylcarboxylate]-3,4,5,6-tetrabromobenzene, diphenyl tolyl phosphate, decabromodiphenyl ether (decaBDE), decabromodiphenyl ethane, brominated polystyrenes, brominated carbonate oligomers (BCOs), brominated epoxy oligomers (BEOs), tetrabromophthalic anyhydride, tetrabromobisphenol A (TBBPA), hexabromocyclododecane (HBCD), triphenyl phosphate (TPP), resorcinol bis(diphenylphosphate) (RDP), bisphenol A diphenyl phosphate (BADP), tricresyl phosphate (TCP), dimethyl methylphosphonate (DMMP), aluminum diethyl phosphinate, tris(2,3-dibromopropyl) phosphate (brominated tris), tris(1,3-dichloro-2-propyl)phosphate (chlorinated tris or TDCPP), tetrakis(2-chloroethyl)dichloroisopentyldiphosphate, and combinations thereof; and/or
(2) the at least one hydrophobic flame retardant is contained in the aqueous dispersion in an amount of 2 to 25 wt.-%, preferably 5 wt.-% to 20 wt.-%, and more preferably 10 wt.-% and 15 wt.-% based on the total weight of the aqueous dispersion with a solid content up to 55%.

11. The process according to any one of claims 1 to 10, wherein
(1) the at least one polyisocyanate is used in excess with respect to the molar ratio of the isocyanate groups to the hydroxy groups of the combined polyols, the OH/NCO equivalent ratio preferably being 1:1.1 to 1:4, and/or
(2) the at least one polyisocyanate is at least one aliphatic diisocyanate or triisocyanate, preferably selected from the group consisting of isophorone diisocyanate (IPDI), hexamethylene diisocyanate (HDI), polymeric polyisocyanates based on IPDI or HDI, and mixtures thereof; and/or
(3) step (3) comprises emulsifying the polyurethane prepolymer/hydrophobic flame retardant mixture into a continuous aqueous phase, preferably water, by mechanical stirring; and/or
(4) the organic solvent/aqueous solution weight ratio in step (3) being 1:3 to 3:1, preferably 1:2 to 2:1, and more preferably 1:1; and/or
(5) the method is an one-pot synthesis.

12. The process according to any one of claims 1 to 11, wherein the chain extension agent comprises at least two NCO-reactive groups and is preferably selected from the group consisting of water, a diol and a diamine, more preferably hydrazine, an alkylene diamine, a cycloalkylene diamine, a silane-containing diamine, an alkyldiol, or a polyetherdiamine, most preferably ethylene diamine, water, isophoronediamine, or a polyetherdiamine, and is optionally used in an amount that ensures essentially total conversion of the isocyanate groups.

13. Aqueous polyurethane dispersion obtainable according to a process of any one of claims 1 to 12.

14. Adhesive composition, comprising the aqueous polyurethane dispersion according to claim 13.

15. Use of the aqueous polyurethane dispersion according to claim 13 in an adhesive composition.
